# EUROPÄISCHE PATENTSCHRIFT

(11) **EP 3 736 457 B1**
(45) Veröffentlichungstag und Bekanntmachung des Hinweises auf die Patenterteilung: **29.09.2021**
(21) Anmeldenummer: 20170756.9
(22) Anmeldetag: 22.04.2020
(51) Int. Cl.: F16B 25/00, F16B 25/10, F16B 35/04

(54) **FÜGEELEMENT**
FASTENING ELEMENT
ÉLÉMENT D'ASSEMBLAGE

(30) Priorität: 03.05.2019 DE 102019111484
(43) Veröffentlichungstag der Anmeldung: 11.11.2020
(73) Patentinhaber: Profil Verbindungstechnik GmbH & Co. KG, 61381 Friedrichsdorf (DE)
(72) Erfinder: Diehl, Oliver, 61250 Usingen (DE); Sowa, Christian, 63165 Mühlheim/Main (DE)
(74) Vertreter: Manitz Finsterwald Patent- und Rechtsanwaltspartnerschaft mbB

(56) Entgegenhaltungen:
- EP-A2- 0 049 218
- WO-A1-01/73305
- DE-A1- 2 249 772
- DE-A1-102011 119 596
- DE-A1-102012 001 068
- JP-B2- 5 791 980

## Beschreibung

Die Erfindung betrifft ein Fügeelement, insbesondere ein selbststanzendes Fügeelement.

Ein Fügeelement gemäß dem Oberbegriff des Anspruchs 1 ist in der DE 10 2011 119 596 A1 beschrieben. Weiterer Stand der Technik ist in WO 01/73305 A1, DE 10 2012 001 068 A1, DE 2 249 772 A1, EP 0 049 218 A2 und JP 5791980 B2 offenbart.

Selbststanzende Fügeelemente sind grundsätzlich bekannt und zeichnen sich dadurch aus, dass sie sich beim Setzen in ein Bauteil selbst den dafür erforderlichen Durchgang in dem Bauteil stanzen. Ein Vorlochen des Bauteils kann somit entfallen. Ein Beispiel für ein derartiges selbststanzendes Fügeelement ist eine Stanznietmutter, welche sich auf besonders einfache Weise in ein Bauteil setzen lässt, da sie in einem Arbeitsgang, gewissermaßen mit einem Hub, sich ihren Durchgang durch das Bauteil formt und mit diesem vernietet wird.

Als problematischer erweist sich dagegen das Setzen eines Fügeelements in ein Bauteil, wenn das Fügeelement ein Außengewinde aufweist und insbesondere einen Gewindebolzenabschnitt ausbildet und das Fügeelement mit dem Außengewinde bzw. Gewindebolzenabschnitt voran durch das Bauteil geführt werden soll. Herkömmlicherweise muss das Bauteil hierfür vorgelocht werden, damit das Außengewinde des Fügeelements beim Setzen in das Bauteil nicht beschädigt wird. Es sind also zwei Arbeitsschritte erforderlich, nämlich Vorlochen des Bauteils und Setzen des Fügeelements in das Bauteil, wobei beim Setzen des Fügeelements erschwerend hinzukommt, dass das Fügeelement zur Vermeidung einer Beschädigung seines Außengewindes beim Eintritt in das Vorloch korrekt mit diesem ausgerichtet werden muss.

Der Erfindung liegt daher die Aufgabe zugrunde, ein Fügeelement zu schaffen, welches selbststanzend in ein Bauteil gesetzt werden kann, ohne dabei ein Außengewinde des Fügeelements zu beschädigen.

Zur Lösung der Aufgabe ist ein Fügeelement mit den Merkmalen des Anspruchs 1 vorgesehen.

Wird das Fügeelement in einem mittels einer Stanzvorrichtung durchgeführten Stanzvorgang in ein Bauteil hineingetrieben, so bahnt sich das Stanzelement unter Herauslösung eines Stanzbutzens seinen Weg durch das Bauteil, wobei es das an dem Schaft ausgebildete Außengewinde schützt. Durch das Stanzelement wird das Fügeelement also zu einem selbststanzenden Fügeelement.

"Verlierbar angebracht" bedeutet in diesem Zusammenhang, dass das Stanzelement so fest mit dem Schaft verbunden ist, dass es sich normalerweise nicht unabsichtlich von diesem lösen kann, insbesondere nicht, wenn das Fügeelement in Form von Schüttgut transportiert wird oder der Stanzvorrichtung zugeführt wird, dass es aber unter Aufbringung einer gewissen Kraft, die zum Beispiel auf das Stanzelement ausgeübt wird, wenn das Bauteil mit dem darin gesetzten Fügeelement von einer Stanzmatrize abgehoben wird und das Stanzelement an der Stanzmatrize hängenbleibt, von dem Schaft getrennt werden kann. Die zur Trennung von Stanzelement und Schaft aufzubringende Kraft kann beispielsweise im Bereich von 10 N bis 50 N liegen.

Vorteilhafte Ausbildungen der Erfindung sind den Unteransprüchen, der Beschreibung und der Zeichnung zu entnehmen.

Zur verlierbaren Anbringung des Stanzelements an dem Schaft kann das Stanzelement stoffschlüssig, kraftschlüssig und/oder formschlüssig mit dem Schaft verbunden sein. Eine stoffschlüssige Verbindung kann beispielsweise durch Kleben oder Löten realisiert werden. Für eine formschlüssige Verbindung bieten sich geeignete Rastmittel an, beispielsweise wenigstens eine Rastvertiefung des Schafts, in die wenigstens ein Rastvorsprung des Stanzelements eingreift oder umgekehrt. Besonders einfach und kostengünstig lässt sich eine kraftschlüssige Verbindung von Stanzelement und Schaft realisieren, beispielsweise indem das Stanzelement auf den Schaft aufgepresst wird.

Für einen besonders guten Schutz des Schafts und des daran vorgesehenen Außengewindes während des Stanzvorgangs ist das Stanzelement vorteilhafterweise aus einem härteren Material gebildet als der Schaft.

Gemäß einer Ausführungsform verjüngt sich der Schaft zu seinem zweiten Ende hin. Die Verjüngung des Schafts ist insbesondere dann vorteilhaft, wenn das Stanzelement kappenförmig ausgebildet ist und den Schaft im Bereich seines zweiten Endes zumindest teilweise umgibt, weil durch die Verjüngung des Schafts trotz ausreichender Stärke des Stanzelements ein minimaler radialer Überstand des Stanzelements über eine maximale radiale Ausdehnung des Schafts hinaus realisiert und dadurch die Ausbildung eines unerwünscht großen Durchgangs in dem Bauteil verhindert werden kann. Ein kappenförmiges Stanzelement lässt sich besonders einfach an dem Schaft anbringen, beispielsweise auf diesen aufpressen, und schützt den Schaft während des Stanzvorgangs besonders wirksam. Beispielsweise wenn sich der Schaft nicht in Richtung seines zweiten Endes verjüngt, kann das Stanzelement alternativ ausschließlich an einer am zweiten Ende des Schafts ausgebildeten Stirnseite angebracht, beispielsweise angeklebt oder angelötet sein. In diesem Fall kann ein für eine erfindungsgemäße Stanzanordnung nach Anspruch 11 ausgebildetes Stanzelement plättchen- oder tellerförmig ausgebildet sein.

Zur besseren Fixierung eines solchen Stanzelements an der Stirnseite, insbesondere zur Vermeidung eines Abrutschens des Stanzelements von der Stirnseite während des Stanzvorgangs, kann der Schaft an seinem zweiten Ende eine Stirnseite ausbilden, die mit einer Vertiefung versehen ist, in die ein Vorsprung des Stanzelements eingreift. Beispielsweise kann es sich bei der Vertiefung um eine Rastvertiefung und bei dem Vorsprung um einen Rastvorsprung handeln, was es grundsätzlich ermöglichen würde, auf ein Ankleben oder Anlöten des Stanzelements an den Schaft zu verzichten. Grundsätzlich kann aber auch ein Rastvorsprung des Stanzelements in einer Rastvertiefung des Schafts verklebt oder verlötet sein.

Wie bereits erwähnt, ist der Schaft mit einem Außengewinde versehen. Dabei kann sich das Außengewinde ausgehend von dem Kopf in Richtung des zweiten Endes erstrecken, insbesondere bis hin zu einem sich verjüngenden Endabschnitt des Schafts. Mit Ausnahme des sich verjüngenden Endabschnitts des Schafts, auf welchem das kappenförmige Stanzelement sitzt, kann also der gesamte Schaft mit Außengewinde versehen sein.

Beispielsweise kann es sich bei dem Fügeelement um einen Gewindebolzen, einen Massebolzen oder einen Schweißbolzen handeln.

Für einen wirksamen Schutz des Außengewindes während eines Stanzvorgangs ist es ausreichend, wenn ein Außendurchmesser des Stanzelements um einen Betrag größer als ein Außendurchmesser des Außengewindes ist, der im Bereich von 10 µm bis 1000 µm, bevorzugt 10 µm bis 500 µm, und besonders bevorzugt 10 µm bis 100 µm liegt. Mit anderen Worten ist der Außendurchmesser des Stanzelements lediglich geringfügig größer als der Außendurchmesser des Außengewindes. Dies hat den Vorteil, dass wenn der Kopf des Fügeelements am Ende eines Stanzvorgangs auf das Bauteil gedrückt wird, das Material des Bauteils in die Gewindegänge des Außengewindes fließen kann, wodurch das Fügeelement sicher in dem Bauteil gehalten wird.

Weiterer Gegenstand der Erfindung ist eine Stanzanordnung umfassend ein Fügeelement mit einem in ein Bauteil zu setzenden Schaft, einem an einem ersten Ende des Schafts vorgesehenen Kopf und einem an einem dem Kopf abgewandten zweiten Ende des Schafts verlierbar angebrachten Stanzelement, sowie eine Stanzmatrize zum Abstützen eines Bauteils, in welches das Fügeelement gesetzt werden soll, wobei die Stanzmatrize ein sich in Stanzrichtung aufweitendes Loch aufweist, in welches der Schaft des Fügeelements beim Setzen des Fügeelements in das Bauteil eintaucht. Dabei ist ein minimaler Durchmesser des Lochs an einen Durchmesser des Stanzelements derart angepasst, dass das Stanzelement während eines Stanzvorgangs in das Loch hineingedrückt werden kann, bei einem Rückzug des Schafts aus dem Loch jedoch an einer das Loch begrenzenden Wand der Stanzmatrize hängenbleibt und sich von dem Fügeelement löst. Durch die Stanzanordnung lassen sich die voranstehend beschriebenen Vorteile entsprechend erreichen.

Das Loch der Matrize kann sich beispielsweise stufenförmig aufweiten, d.h. also eine Stufe oder Schulter ausbilden, welche besonders wirksam sicherstellt, dass das Stanzelement bei einem Rückzug des Schafts aus dem Loch hängenbleibt und sich von dem Schaft löst.

Damit ein gegebenenfalls vorhandenes Außengewinde des Fügeelements beim Eintauchen in das Loch der Stanzmatrize nicht beschädigt wird, gleichzeitig aber sichergestellt ist, dass sich das Stanzelement beim Abheben des Bauteils und des darin gesetzten Fügeelements von der Stanzmatrize von dem Schaft löst, ist derminimale Durchmesser des Lochs größer als ein Außendurchmesser des Außengewindes des Fügeelements und kleiner als ein Außendurchmesser des Stanzelements.

Nachfolgend wird die Erfindung rein beispielhaft anhand möglicher Ausführungsformen unter Bezugnahme auf die beigefügte Zeichnung beschrieben. Es zeigen:
- Fig. 1: ein Fügeelement gemäß einer ersten Ausführungsform der Erfindung;
- Fig. 2: eine erfindungsgemäße Stanzanordnung während eines Stanzprozesses;
- Fig. 3: ein Fügeelement für eine Stanzanordnung gemäß einer zweiten Ausführungsform der Erfindung.

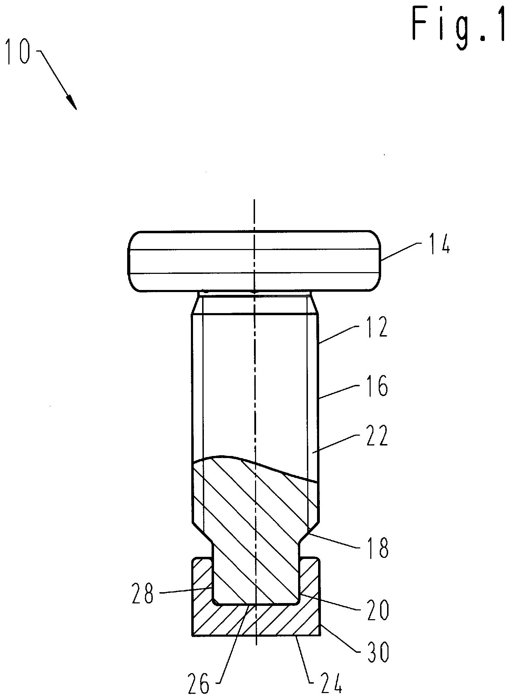

In Fig. 1 ist eine erste Ausführungsform eines Fügeelements 10 dargestellt, welches einen Schaft 12 aufweist, an dessen erstes Ende sich ein Kopf 14 anschließt. Im Bereich seines dem Kopf 14 abgewandten zweiten Endes verjüngt sich der Schaft 12. Konkret geht der Schaft 12 ausgehend von einem Hauptabschnitt 16 in einen konischen Zwischenabschnitt 18 über, an welchen sich ein zylindrischer Endabschnitt 20 anschließt, der einen gegenüber einem Außendurchmesser des Hauptabschnitts 16 reduzierten Außendurchmesser aufweist.

Der Schaft 12 ist ausgehend von dem Kopf 14 über die gesamte Länge des Hauptabschnitts 16 mit einem Außengewinde 22 versehen.

Beispielsweise kann es sich bei dem Fügeelement 10 um einen Gewindebolzen, einen Massebolzen oder einen Schweißbolzen handeln.

Auf den Endabschnitt 20 ist ein kappenförmiges Stanzelement 24 aufgepresst, welches eine dem Kopf 14 abgewandte Stirnseite 26 des Schafts 12 sowie zumindest bereichsweise eine Mantelfläche 28 des Endabschnitts 20 abdeckt. Die Presspassung zwischen Stanzelement 24 und Endabschnitt 20 ist so gewählt, dass sich das Stanzelement 24 während eines Transports des Fügeelements 10 in Form von Schüttgut oder während der Zuführung des Fügeelements 10 zu einer Stanzvorrichtung nicht unabsichtlich von dem Schaft 12 lösen kann, trotzdem aber eine Trennung von Stanzelement 24 und Schaft 12 nach Beendigung eines Stanzvorgangs möglich ist, wie nachfolgend näher erläutert wird. Konkret kann das Stanzelement 24 unter Aufbringung einer Kraft von beispielsweise mindestens 10 N von dem Endabschnitt 20 abgezogen werden.

Entsprechend dem Endabschnitt 20 weist das Stanzelement 24 eine zylindrische Mantelfläche 30 auf. Ein Außendurchmesser des Stanzelements 24 ist dabei geringfügig größer gewählt als ein Außendurchmesser des Außengewindes 22. Konkret ist der Außendurchmesser des Stanzelements 24 um einen Betrag größer als der Außendurchmesser des Außengewindes, welcher im Bereich von 10 µm bis 1000 µm, bevorzugt 10 µm bis 500 µm und besonders bevorzugt 10 µm bis 100 µm liegt.

Das Stanzelement 24 kann aus einem härteren Material gebildet sein als der Schaft 12.

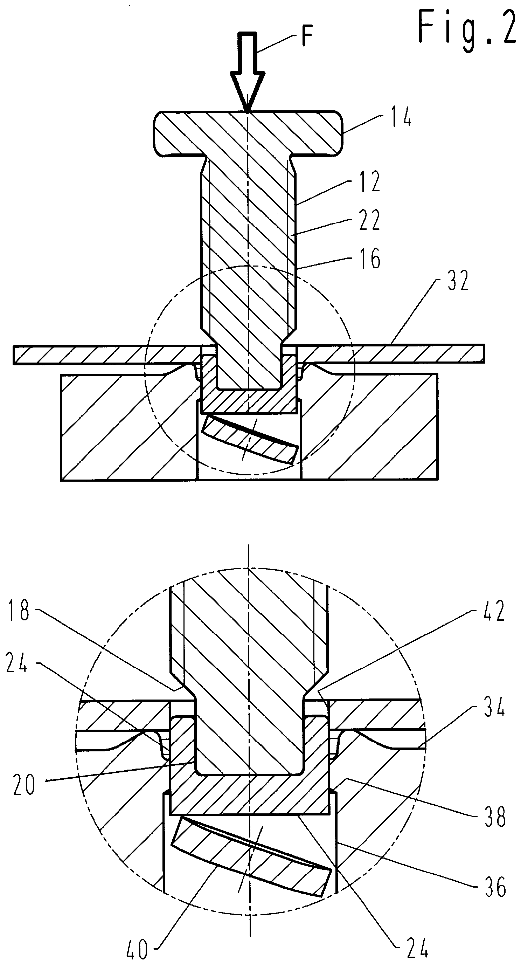

Bei dem Fügeelement 10 handelt es sich um ein selbststanzendes Fügeelement 10, wie anhand von Fig. 2 nun genauer erläutert wird.

Das Fügeelement 10 wird in an sich bekannter Weise einer Stanzvorrichtung zugeführt und in dieser mittels eines nicht dargestellten Werkzeugs unter Aufbringung einer Kraft F im Bereich von mehreren 1000 N auf ein Bauteil 32, beispielsweise ein Blech, gedrückt, in welches das Fügeelement 10 gesetzt werden soll. Das Bauteil 32 wird während des Stanzvorgangs durch eine Stanzmatrize 34 abgestützt, in welcher ein Loch 36 ausgebildet ist, das mit dem Fügeelement 10 ausgerichtet ist.

Während des Stanzvorgangs durchdringt das Stanzelement 24 das Bauteil 32, wobei ein Stanzbutzen 40 aus dem Bauteil 32 herausgetrennt wird und in das Loch 36 hineinfällt. Aufgrund des gegenüber dem Außengewinde 22 geringfügig größeren Außendurchmessers des Stanzelements 24 ist der durch das Stanzelement 24 in dem Bauteil 32 erzeugte Durchgang 42 ebenfalls geringfügig weiter als das Außengewinde 22, so dass der Schaft 12 ohne Beschädigung des Außengewindes 22 in das Bauteil 12 eintauchen kann, bis der Kopf 14 auf dem Bauteil 32 zu liegen kommt. Eine für einen gewissen Zeitraum anhaltende Stanzkraft bewirkt nun, dass das den Durchgang 42 begrenzende Material des Bauteils 32 zu fließen beginnt und mit dem Außengewinde 22 in Eingriff gerät, wodurch das Fügeelement 10 an dem Bauteil 32 festgelegt wird.

In dieser Situation sitzt das Stanzelement 24 noch auf dem Endabschnitt 20 des Schafts 12. Wird das Bauteil 32 mit dem darin gesetzten Fügeelement 10 nun von der Stanzmatrize 34 abgehoben, so stößt das Stanzelement 24 von der dem Bauteil 32 abgewandten Seite her gegen die das Loch 36 begrenzende Wand der Stanzmatrize 34 und wird durch diese von dem Schaft 12 des Fügeelements 10 abgestreift.

Das Loch 36 weitet sich hierzu unter Bildung einer Schulter 38 in Richtung des Inneren der Stanzmatrize 34 auf. Dabei ist ein minimaler Durchmesser des Lochs 36 derart an den Außendurchmesser des Stanzelements 24 angepasst, dass das Stanzelement 24 zwar während eines Stanzvorgangs durch das Loch 36 in die Stanzmatrize 34 hineingedrückt werden kann, beim Herausziehen des Schafts 12 aus der Stanzmatrize 34 jedoch an der Schulter 38 der Stanzmatrize 34 hängenbleibt und von dem Schaft 12 abgezogen wird. Der minimale Durchmesser des Lochs 36 ist also geringfügig kleiner als der Außendurchmesser des Stanzelements 24, gleichzeitig aber größer als der Außendurchmesser des Außengewindes 22 des Fügeelements 10, damit dieses beim Eintauchen des Schafts 12 in das Loch 36 nicht beschädigt wird.

Das abgelöste Stanzelement 24 kann anschließend zusammen mit dem Stanzbutzen 40 aus dem Loch 36 der Stanzmatrize 34 entfernt werden.

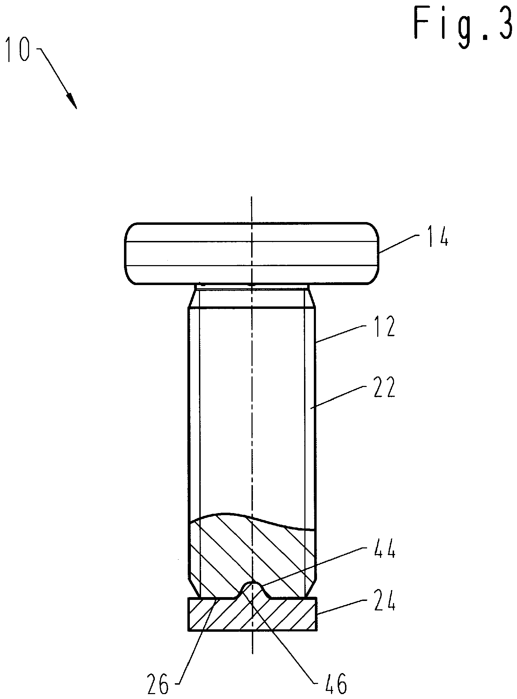

In Fig. 3 ist eine zweite Ausführungsform eines Fügeelements 10 dargestellt, welche sich von der voranstehend beschriebenen ersten Ausführungsform zum einen darin unterscheidet, dass sich der Schaft 12 im Bereich seines dem Kopf 14 abgewandten zweiten Endes nicht signifikant verjüngt und sich das Außengewinde 22 im Wesentlichen bis an das zweite Ende des Schafts 12 erstreckt. Zum anderen ist das Stanzelement 24 hier tellerförmig ausgebildet, so dass es lediglich die Stirnseite 26 des Schafts 12 abdeckt. Die verlierbare Anbringung des Stanzelements 24 an dem Schaft 12 erfolgt in diesem Fall mittels einer Klebe- oder Lötverbindung. Alternativ oder zusätzlich ist es auch vorstellbar, eine Rastvertiefung 44 in die Stirnseite 26 des Schafts 12 einzubringen, in welche ein komplementär ausgebildeter Rastvorsprung 46 des Stanzelements 24 eingreift.

Wie bei der ersten Ausführungsform ist der Außendurchmesser des Stanzelements 24 gemäß zweiter Ausführungsform geringfügig größer als der Außendurchmesser des Außendurchmesser 22 gewählt, so dass das Stanzelement 24 einen Durchgang 42 in das Bauteil 32 stanzt, welcher ein beschädigungsfreies Durchdringen des Bauteils 32 durch das Außengewinde 22 ermöglicht, das Stanzelement 24 aber trotzdem durch das Loch 36 der Stanzmatrize 34 hindurchzutreten vermag und beim Herausziehen des Schafts 12 aus dem Loch 36 an der Stanzmatrize 34 hängenbleibt, um von dem Schaft 12 gelöst zu werden.

### Bezugszeichenliste

- 10: Fügeelement
- 12: Schaft
- 14: Kopf
- 16: Hauptabschnitt
- 18: Zwischenabschnitt
- 20: Endabschnitt
- 22: Außengewinde
- 24: Stanzelement
- 26: Stirnseite
- 28: Mantelfläche
- 30: Mantelfläche
- 32: Bauteil
- 34: Stanzmatrize
- 36: Loch
- 38: Schulter
- 40: Stanzbutzen
- 42: Durchgang
- 44: Rastvertiefung
- 46: Rastvorsprung

- F: Kraft

## Patentansprüche

1. Fügeelement (10) mit einem in ein Bauteil (32) zu setzenden Schaft (12),
einem an einem ersten Ende des Schafts (12) vorgesehenen Kopf (14) und einem an einem dem Kopf (14) abgewandten zweiten Ende des Schafts (12) verlierbar angebrachten Stanzelement (24),
**dadurch gekennzeichnet,**
**dass** das Stanzelement (24) kappenförmig ausgebildet ist und den Schaft (12) im Bereich seines zweiten Endes zumindest teilweise umgibt und dass der Schaft (12) mit einem Außengewinde (22) versehen ist.

2. Fügeelement (10) nach Anspruch 1,
wobei das Stanzelement (24) stoffschlüssig, kraftschlüssig und/oder formschlüssig mit dem Schaft (12) verbunden ist.

3. Fügeelement (10) nach Anspruch 1 oder 2,
wobei das Stanzelement (24) auf den Schaft (12) aufgepresst ist.

4. Fügeelement (10) nach einem der vorherigen Ansprüche,
wobei das Stanzelement (24) aus einem härteren Material gebildet ist als der Schaft (12).

5. Fügeelement (10) nach einem der vorherigen Ansprüche,
wobei der Schaft (12) an seinem zweiten Ende eine Stirnseite (26) ausbildet, die mit einer Vertiefung (44) versehen ist, in die ein Vorsprung (46) des Stanzelements (24) eingreift.

6. Fügeelement (10) nach einem der vorherigen Ansprüche,
wobei der Schaft (12) sich zu seinem zweiten Ende hin verjüngt und/oder der Schaft (12) einen verjüngten Endabschnitt (20) aufweist.

7. Fügeelement (10) nach einem der vorherigen Ansprüche,
wobei sich das Außengewinde (22) ausgehend von dem Kopf (14) in Richtung des zweiten Endes erstreckt.

8. Fügeelement (10) nach einem der vorherigen Ansprüche,
wobei sich das Außengewinde (22) ausgehend von dem Kopf (14) bis zu einem sich verjüngenden Endabschnitt (20) des Schafts (12) erstreckt.

9. Fügeelement (10) nach einem der vorherigen Ansprüche,
wobei ein Außendurchmesser des Stanzelements (24) um einen Betrag größer als ein Außendurchmesser des Außengewindes (22) ist, der im Bereich von 10 µm bis 1000 µm, bevorzugt 10 µm bis 500 µm und besonderes bevorzugt 10 µm bis 100 µm liegt.

10. Fügeelement (10) nach einem der vorherigen Ansprüche,
wobei das Fügeelement (10) ein Gewindebolzen, ein Massebolzen oder ein Schweißbolzen ist.

11. Stanzanordnung umfassend
ein Fügeelement (10) mit einem in ein Bauteil (32) zu setzenden Schaft (12), einem an einem ersten Ende des Schafts (12) vorgesehenen Kopf (14) und einem an einem dem Kopf (14) abgewandten zweiten Ende des Schafts (12) verlierbar angebrachten Stanzelement (24), **gekennzeichnet durch**
eine Stanzmatrize (34) zum Abstützen eines Bauteils (32), in welches das Fügeelement (10) gesetzt werden soll, wobei die Stanzmatrize (34) ein sich in Stanzrichtung aufweitendes Loch (36) aufweist, in welches der Schaft (12) des Fügeelements (10) beim Setzen des Fügeelements (10) in das Bauteil (32) eintaucht, wobei ein minimaler Durchmesser des Loches (36) an einen Außendurchmesser des Stanzelements (24) derart angepasst ist, dass das Stanzelement (24) während eines Stanzvorgangs in das Loch (36) hineingedrückt werden kann, bei einem Rückzug des Schafts (12) aus dem Loch (36) jedoch an einer das Loch (36) begrenzenden Wand der Stanzmatrize (34) hängen bleibt und sich von dem Fügeelement (10) löst.

12. Stanzanordnung nach Anspruch 11,
wobei sich das Loch (36) stufenförmig aufweitet.

13. Stanzanordnung nach Anspruch 11 oder 12,
wobei der minimale Durchmesser des Loches (36) größer als ein Außendurchmesser eines Außengewindes (22) des Fügeelements (10) und kleiner als ein Außendurchmesser des Stanzelements (24) ist.

## Claims

1. A joining element (10) comprising a shaft (12) to be placed into a component (32); a head (14) provided at a first end of the shaft (12); and a punching element (24) attached in a losable manner to a second end of the shaft (12) remote from the head (14),
**characterized in that**
the punching element (24) is cap-shaped and at least partly surrounds the shaft (12) in the region of its second end; and
**in that** the shaft (12) is provided with an external thread (22).

2. A joining element (10) in accordance with claim 1,
wherein the punching element (24) is connected to the shaft (12) in a bonded, force-transmitting and/or form-fitted manner.

3. A joining element (10) in accordance with claim 1 or claim 2,
wherein the punching element (24) is pressed onto the shaft (12).

4. A joining element (10) in accordance with any one of the preceding claims,
wherein the punching element (24) is formed from a harder material than the shaft (12).

5. A joining element (10) in accordance with any one of the preceding claims,
wherein the shaft (12) forms an end face (26) at its second end, said end face (26) being provided with a recess (44) into which a projection (46) of the punching element (24) engages.

6. A joining element (10) in accordance with any one of the preceding claims,
wherein the shaft (12) tapers toward its second end and/or the shaft (12) has a tapered end section (20).

7. A joining element (10) in accordance with any one of the preceding claims,
wherein the external thread (22) extends, starting from the head (14), in the direction of the second end.

8. A joining element (10) in accordance with any one of the preceding claims,
wherein the external thread (22) extends, starting from the head (14), up to a tapering end section (20) of the shaft (12).

9. A joining element (10) in accordance with any one of the preceding claims,
wherein an outer diameter of the punching element (24) is larger than an outer diameter of the external thread (22) by an amount that is in a range from 10 µm to 1000 µm, preferably 10 µm to 500 µm, and particularly preferably 10 µm to 100 µm.

10. A joining element (10) in accordance with any one of the preceding claims,
wherein the joining element (10) is a threaded bolt, a ground bolt or a welded bolt.

11. A punching arrangement comprising
a joining element (10) comprising a shaft (12) to be placed into a component (32); a head (14) provided at a first end of the shaft (12); and a punching element (24) attached in a losable manner to a second end of the shaft (12) remote from the head (14), **characterized by**
a punch die (34) for supporting a component (32) into which the joining element (10) is to be placed, wherein the punch die (34) has a hole (36) which widens in a punching direction and into which the shaft (12) of the joining element (10) dips on the placement of the joining element (10) into the component (32); and wherein a minimum diameter of the hole (36) is adapted to an outer diameter of the punching element (24) such that the punching element (24) can be pressed into the hole (36) during a punching process; however, on a withdrawal of the shaft (12) from the hole (36), said punching element (24) gets caught at a wall of the punch die (34) bounding the hole (36) and releases from the joining element (10).

12. A punching arrangement in accordance with claim 11,
wherein the hole (36) widens in step form.

13. A punching arrangement in accordance with claim 11 or claim 12,
wherein the minimum diameter of the hole (36) is larger than an outer diameter of an external thread (22) of the joining element (10) and smaller than an outer diameter of the punching element (24).

## Revendications

1. Elément d'assemblage (10) comprenant une tige (12) à insérer dans une pièce (32), une tête (14) prévue à une première extrémité de la tige (12), et un élément de poinçonnage (24) monté de manière perdable à une seconde extrémité de la tige (12) détournée de la tête (14),
**caractérisé en ce que**
l'élément de poinçonnage (24) est réalisé en forme de capuchon et entoure au moins partiellement la tige (12) dans la zone de sa seconde extrémité, et **en ce que**
la tige (12) est pourvue d'un filetage extérieur (22).

2. Elément d'assemblage (10) selon la revendication 1,
dans lequel
l'élément de poinçonnage (24) est relié à la tige (12) par coopération de matière, de force et/ou de forme.

3. Elément d'assemblage (10) selon la revendication 1 ou 2,
dans lequel l'élément de poinçonnage (24) est pressé sur la tige (12).

4. Elément d'assemblage (10) selon l'une des revendications précédentes,
dans lequel l'élément de poinçonnage (24) est réalisé en un matériau plus dur que celui de la tige (12).

5. Elément d'assemblage (10) selon l'une des revendications précédentes,
dans lequel la tige (12) forme à sa seconde extrémité une face frontale (26) pourvue d'un renfoncement (44) dans lequel s'engage une saillie (46) de l'élément de poinçonnage (24).

6. Elément d'assemblage (10) selon l'une des revendications précédentes,
dans lequel la tige (12) va en se rétrécissant vers sa seconde extrémité et/ou la tige (12) présente une portion d'extrémité rétrécie (20).

7. Elément d'assemblage (10) selon l'une des revendications précédentes,
dans lequel le filetage extérieur (22) s'étend à partir de la tête (14) en direction de la seconde extrémité.

8. Elément d'assemblage (10) selon l'une des revendications précédentes,
dans lequel le filetage extérieur (22) s'étend à partir de la tête (14) jusqu'à une portion d'extrémité rétrécie (20) de la tige (12).

9. Elément d'assemblage (10) selon l'une des revendications précédentes,
dans lequel un diamètre extérieur de l'élément de poinçonnage (24) est plus grand qu'un diamètre extérieur du filetage extérieur (22) d'une valeur absolue allant de 10 µm à 1000 µm, de préférence de 10 µm à 500 µm et de manière particulièrement préférée de 10 µm à 100 µm.

10. Elément d'assemblage (10) selon l'une des revendications précédentes,
dans lequel l'élément d'assemblage (10) est un boulon fileté, un boulon de mise à la terre ou un boulon à souder.

11. Ensemble de poinçonnage comprenant
un élément d'assemblage (10) comprenant une tige (12) à insérer dans une pièce (32), une tête (14) prévue à une première extrémité de la tige (12), et
un élément de poinçonnage (24) monté de manière perdable à une seconde extrémité de la tige (12) détournée de la tête (14),
**caractérisé par**
une matrice de poinçonnage (34) pour supporter une pièce (32) dans laquelle l'élément d'assemblage (10) doit être inséré, la matrice de poinçonnage (34) présentant un trou (36) qui s'élargit dans la direction de poinçonnage et dans lequel la tige (12) de l'élément d'assemblage (10) s'enfonce lors de l'insertion de l'élément d'assemblage (10) dans la pièce (32), un diamètre minimal du trou (36) étant adapté à un diamètre extérieur de l'élément de poinçonnage (24) de telle sorte que pendant une opération de poinçonnage l'élément de poinçonnage (24) peut être pressé dans le trou (36), mais, lors d'un retrait de la tige (12) hors du trou (36), il reste accroché à une paroi de la matrice de poinçonnage (34) délimitant le trou (36) et se détache de l'élément d'assemblage (10).

12. Ensemble de poinçonnage selon la revendication 11,
dans lequel le trou (36) va en s'élargissant en gradins.

13. Ensemble de poinçonnage selon la revendication 11 ou 12,
dans lequel le diamètre minimal du trou (36) est supérieur à un diamètre extérieur d'un filetage extérieur (22) de l'élément d'assemblage (10) et inférieur à un diamètre extérieur de l'élément de poinçonnage (24).
